# EUROPEAN PATENT APPLICATION

(11) **EP 2 633 889 A2**
(43) Date of publication of application: **04.09.2013**
(21) Application number: 13155642.5
(22) Date of filing: 18.02.2013
(51) Int. Cl.: A63B 24/00, H02J 9/00

(54) **Power-saving control module for a body training machine**

(30) Priority: 24.02.2012 TW 101203403
(71) Applicant: Tonic Fitness Technology, Inc., Tainan City (TW)
(72) Inventor: Wu, Mu-Chuan, Tainan City (TW)
(74) Representative: Dossmann, Gérard

(57) **Abstract**

A power-saving control module for a body training machine has a controller (21), a first electric switch (22) and a power supply (23). The controller (21) is connected to the body training machine for receiving a first trigger signal. The first electric switch (22) is connected between the body training machine and a power source. When the controller (21) does not receive the first trigger signal, which means the body training machine is in a standby state, the controller (21) determines whether a standby time of the body training machine exceeds a threshold time. When the standby time exceeds the threshold time, the controller (21) generates a turn-off signal to the first electric switch (22). The first electric switch (22) then disconnects the body training machine from the power source. Hence, the power consumption of the standby body training machine decreases.

## Description

The present invention relates to a power-saving control module, and more particularly to a power-saving control module for a body training machine.

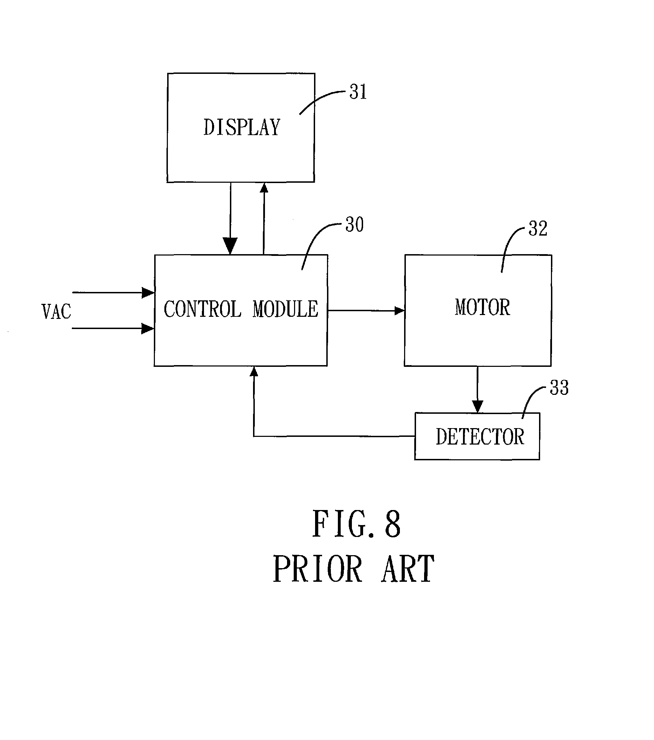

With reference to FIG. 8, nowadays, many body training machines are equipped with electronic devices including a control module 30, a display 31, a motor 32, a detector 33, and so on. When a user exercises on the body training machine, the control module 30 activates the motor 32. The operating of the body training machine is detected by the detector 33. The control module 30 is electrically connected to the detector 33 to calculate and convert the operating of the body training machine into operating information such as energy consumption (calorie). The display 31 is adapted to show the exercising states for the user. In conclusion, the electronic devices of the body training machine are useful and convenient.

The electronic devices and the body training machine are driven by electrical power. However, power saving is a worldwide trend presently. For example, the power consumption of the standby body training machine should be lower than 0.5W as regulated by European Union (EU). Therefore, when the body training machine is in a standby state, the power consumption of the body training machine should be as low as possible.

Even though the body training machine is in a standby state, some of the electronic devices are still working and hence consuming electrical power. As a result, the power consumption of the standby body training machine and the electric devices cannot further decrease.

An objective of the present invention is to provide a power-saving control module for a body training machine. When the body training machine is in a standby state, the control module of the invention can automatically shut down the body training machine. As a result, the power consumption of the standby body training machine is reduced to a minimum.

The power-saving control module of the present invention comprises a controller, a first electric switch and a power supply.

The controller has a timer and a time selector for setting a threshold time. The controller is electrically connected to the body training machine for receiving a first trigger signal. When the controller does not receive the first trigger signal, the controller reads the threshold time from the time selector and activates the timer to count time. The controller generates a turn-off signal when a counting time of the timer exceeds the threshold time and the controller still does not receive the first trigger signal.

The first electric switch is electrically connected to the controller to disconnect the body training machine from a power source when the turn-off signal is received.

The power supply is electrically connected to the controller and the first electric switch for providing a working voltage.

In conclusion, when the body training machine is in a standby state, the controller cannot receive the first trigger signal. When the counting time exceeds the threshold time, which means a standby time is too long to be acceptable, the controller then controls the first electric switch to disrupt the main power of the body training machine. The power-saving control module is able to determine if the standby time of the body training machine is too long and automatically shut down the body training machine. Hence, the power consumed by the body training machine is reduced.
FIG. 1 is a circuit block diagram of a first embodiment of the invention connected to a body training machine;
FIG. 2 is a circuit block diagram of the first embodiment of the invention;
FIG. 3 is a flow chart of the first embodiment executing a power-saving function for an exercise bike;
FIG. 4 is a flow chart of the first embodiment executing the power-saving function for a vibration exercising machine;
FIG. 5 is a circuit block diagram of a second embodiment of the invention connected to a treadmill;
FIG. 6 is a circuit block diagram of a second embodiment of the invention for a treadmill;
FIG. 7 is a flow chart of the second embodiment executing the power-saving function for a treadmill; and
FIG. 8 is a circuit block diagram of a conventional electronic device of a body training machine.

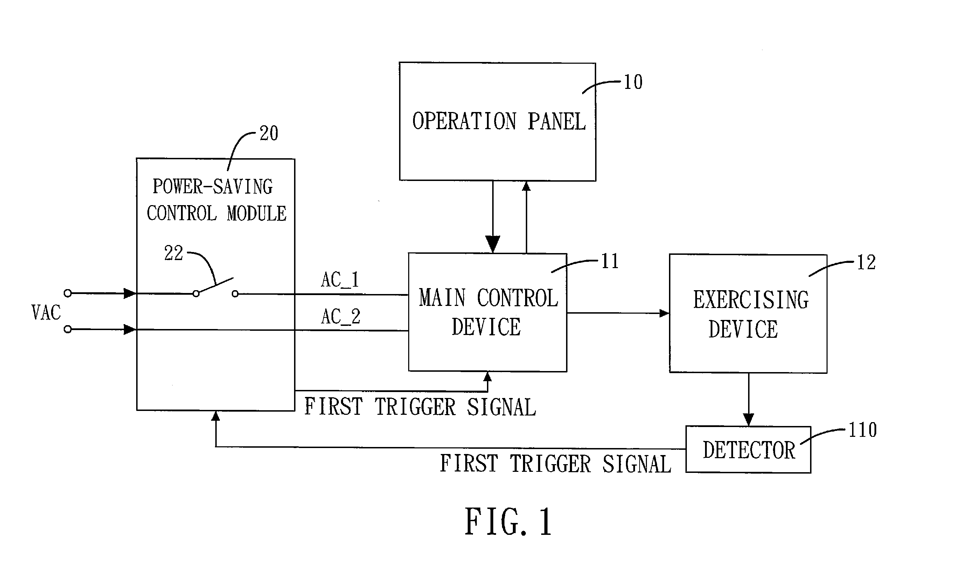

With reference to FIG. 1, a circuit block diagram of the power-saving control module of the invention applied on a body training machine is disclosed. The body training machine can be an exercise bike, a treadmill or a vibration exercising machine.

The body training machine mainly has an operation panel 10, a main control device 11, a detector 110 and an exercising device 12. For example, the exercising device 12 can be a resistance system when the body training machine is an exercise bike. The exercising device 12 can be a motor when the body training machine is a vibration exercising machine or a treadmill. The motor is electrically connected to the main control device 11. The main control device 11 activates the motor to vibrate pedals of the vibration exercising machine or to push a treadmill tape of the treadmill. The detector 110 detects operating information, such as a rotational speed (RPM) of the resistance system or the motor, of the exercising device 12 to correspondingly generate a signal. The main control device 11 calculates exercising states of a user who is operating the body training machine according to the signal of the detector 110. The operation panel 10 shows the exercising states for the user.

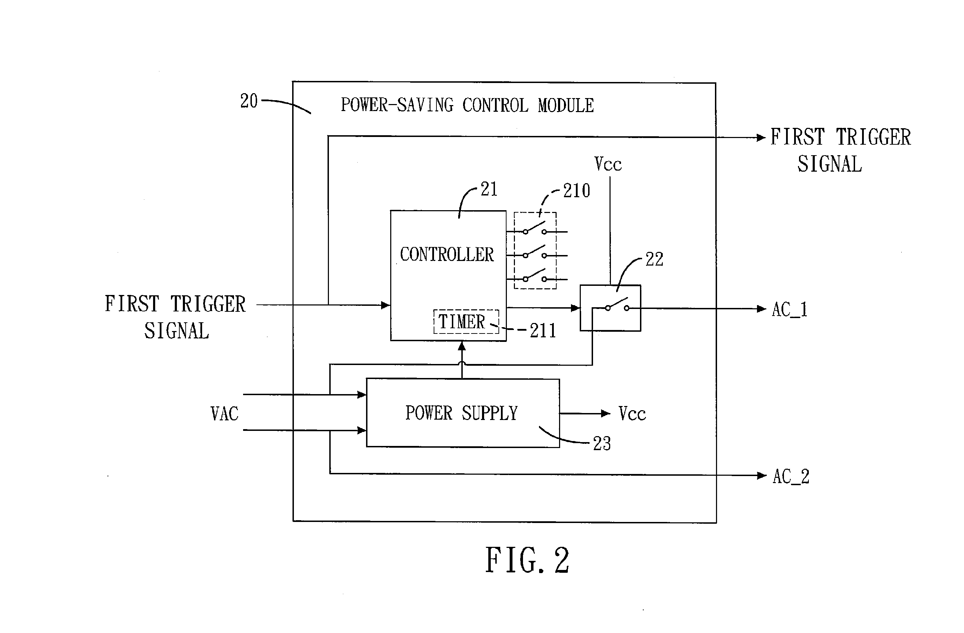

The main control device 11 is electrically connected to a power source (VAC) to receive a main power. The power-saving control module 20 of the invention is electrically connected between the main control device 11 and the power source (VAC) in series. With reference to FIG. 2, a circuit block diagram of a first embodiment of the present invention is disclosed. The power-saving control module 20 of the invention comprises a controller 21, a first electric switch 22 and a power supply 23.

The controller 21 has a timer 211 and a time selector 210 electrically connected to the timer 211. The timer 211 can be a built-in timer of the controller 21 or an external timer. The time selector 210 can be a dip switch for setting a threshold time. The controller 21 receives the signal from the detector 110 and defines the signal as a first trigger signal. Because the detector 110 generates the signal based on the operating information of the exercising device 12, the controller 21 determines whether the body training machine is in use according to the first trigger signal.

The controller 21 can generate a turn-on signal or a turn-off signal to control the first electric switch 22. When the controller 21 does not receive the first trigger signal, which means the body training machine is in a standby state, the controller 21 then reads the threshold time from the time selector 210, activates the timer 211 to count time and determines whether a counting time of the timer 211 exceeds the threshold time or not. When the controller 21 still does not receive the first trigger signal after the counting time exceeds the threshold time, the controller 21 generates the turn-off signal. On the other hand, when the controller 21 receives the first trigger signal before the counting time exceeds the threshold time, which means the body training machine is again in use, the controller 21 generates the turn-on signal and resets the timer 211.

The first electric switch 22 can be a relay and is electrically connected to a power path (AC_1 AC_2) of the body training machine in series. In this embodiment, the first electric switch 22 is connected between the main control device 11 of the body training machine and the power source (VAC). The first electric switch 22 is electrically connected to the controller 21 to receive the turn-on signal or the turn-off signal from the controller 21. The first electric switch 22 connects the body training machine to the power source (VAC) according to the turn-on signal, and disconnects the body training machine from the power source (VAC) according to the turn-off signal.

The power supply 23 is electrically connected to the power source (VAC) to receive the main power. The power supply 23 is also connected to the controller 21 and the first electric switch 22. The power supply 23 converts the main power to a DC working voltage for providing the controller 21 and the first electric switch 22.

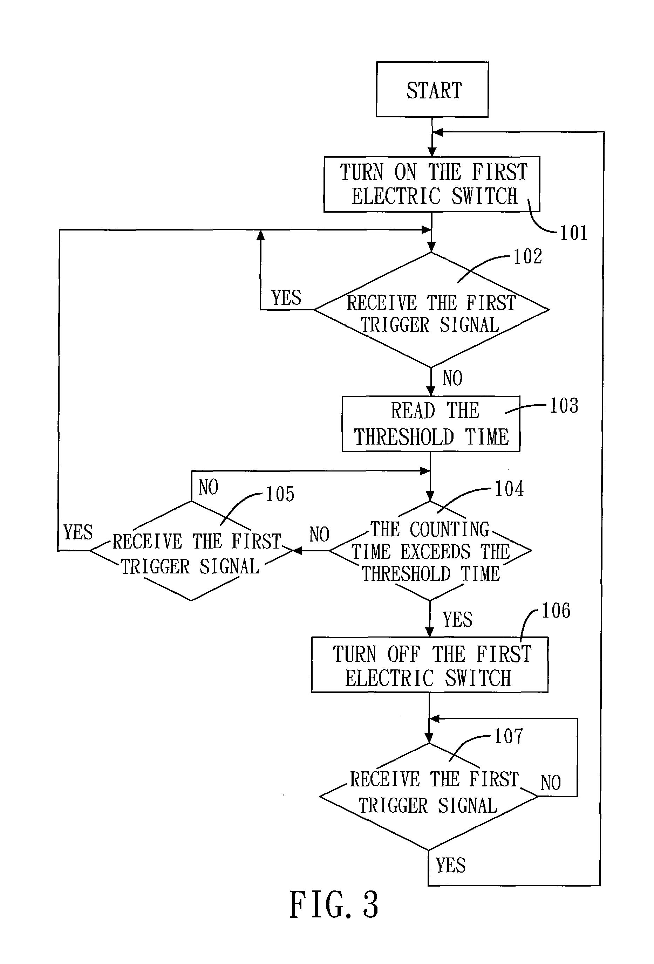

With reference to Fig. 3, the body training machine is an exercise bike as an example. After the exercise bike is turned on by the user, the controller 21 executes the following steps to reach a goal of power-saving.

The controller 21 turns on the first electric switch 22 (step 101) to connect the main control device 11 to the power source (VAC). When the exercise bike is in use, the resistance system, such as a flywheel, of the exercise bike is rotating. The detector 110 detects a rotation speed of the resistance system and correspondingly generates an RPM signal. The main control device 11 then records the RPM signal and calculates exercising states of the user according to the RPM signal. The operation panel 10 displays the exercising states.

The controller 21 determines whether the first trigger signal is received, wherein the first trigger signal is the RPM signal of the detector 110 (step 102). When the controller 21 receives the first trigger signal, which means the exercise bike is in use, the controller 21 returns to the step (102) until the controller 21 no longer receives the first trigger signal.

When the controller 21 determines the first trigger signal is not received, which means the exercise bike is in a standby state, the controller 21 then activates the timer 211, reads the counting time of the timer 211 and reads the threshold time from the time selector 210 (step 103).

When the controller 21 obtains the counting time and the threshold time, the controller 21 determines whether the counting time exceeds the threshold time (step 104).

When the counting time does not exceed the threshold time, which means a standby time of the exercise bike is acceptable, the controller 21 then keeps determining whether the first trigger signal is received (step 105). If the controller 21 receives the first trigger signal before the counting time exceeds the threshold time, which means the exercise bike is in use again, the controller 21 will return to the step (102), reset the timer 211 and turn on the first electric switch 22. On the other hand, if the controller 21 does not receive the first trigger signal after the counting time exceeds the threshold time, which means the exercise bike is still in a standby state, the controller 21 will return to the step (104).

When the controller 21 determines the counting time exceeds the threshold time, which means the standby time of the exercise bike is too long to be acceptable, the controller 21 turns off the first electric switch 22 to disconnect the main control device 11 from the power source (VAC) (step 106). The exercise bike is then shut down. Meanwhile, the power supply 23 still provides the DC working voltage to the controller 21 and the first electric switch 22.

The controller 21 again determines whether the first trigger signal is received (step 107). If the controller 21 receives the first trigger signal, which means the exercise bike is again in use, the controller 21 will return to the step (101). If the controller 21 does not receive the first trigger signal, which means the exercise bike is still in a standby state, the controller 21 will return to the step (107) until the controller 21 receives the first trigger signal.

Hence, for the exercise bike, if the counting time of the timer 211 exceeds the threshold time, the controller 21 automatically shuts down the exercise bike. As a result, because the exercise bike is shut down, the operation panel 10 and the main control device 11 do not consume electrical power such that a goal of power-saving is achieved.

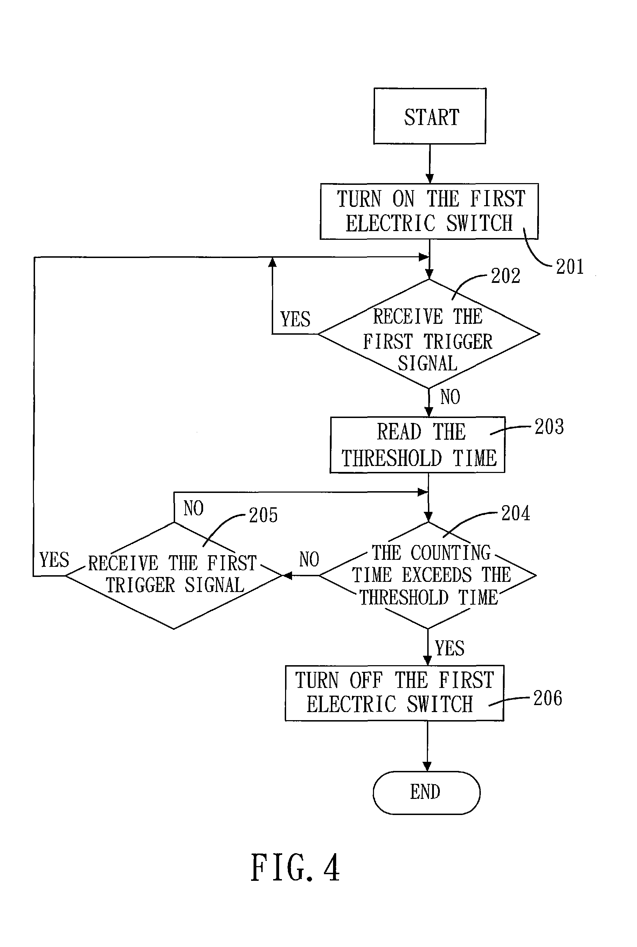

For another example, if the body training machine is a vibration exercising machine, the exercising device 12 can be a motor. With reference to FIG. 4, the controller 21 executes the following steps to reach the goal of power-saving.

After the vibration exercising machine is turned on by the user, the controller 21 turns on the first electric switch 22 (step 201) to connect the main control device 11 to the power source (VAC). When the vibration exercising machine is in use, the motor of the vibration exercising machine is rotating. The detector 110 detects a rotation speed of the motor and correspondingly generates an RPM signal. The detector 110 also can detect other signals which are generated from the vibration exercising machine.

The controller 21 determines whether the first trigger signal is received (step 202), wherein the first trigger signal can be the RPM signal of the detector 110 or other signals which are generated from the vibration exercising machine. If the controller 21 receives the first trigger signal, which means the vibration exercising machine is in use, the controller 21 will return to the step (202) until the controller 21 no longer receives the first trigger signal.

When the controller 21 determines the first trigger signal is not received, which means the vibration exercising machine is in a standby state, the controller 21 then activates the timer 211, reads the counting time of the timer 211 and reads the threshold time from the time selector 210 (step 203).

When the controller 21 gets the counting time and the threshold time, the controller 21 determines whether the counting time exceeds the threshold time (step 204).

When the counting time does not exceed the threshold time, which means the standby time of the vibration exercising machine is acceptable, the controller 21 determines whether the first trigger signal is received (step 205). If the controller 21 receives the first trigger signal before the counting time exceeds the threshold time, which means the vibration exercising machine is in use again, the controller 21 will return to the step (202), reset the timer 211 and turn on the first electric switch 22. On the other hand, if the controller 21 does not receive the first trigger signal after the counting time exceeds the threshold time, which means the vibration exercising machine is still in a standby state, the controller 21 will return to the step (204).

When the controller 21 determines the counting time exceeds the threshold time, which means the standby time of the vibration exercising machine is too long to be acceptable, the controller 21 turns off the first electric switch 22 to disconnect the main control device 11 from the power source (VAC) (step 206). The vibration exercising machine is then shut down.

Similarly, as for the vibration exercising machine, if the counting time of the timer 211 exceeds the threshold time, the controller 21 automatically shuts down the vibration exercising machine. As a result, because the vibration exercising machine is shut down, the operation panel 10 and the main control device 11 do not consume electrical power such that the goal of power-saving is achieved.

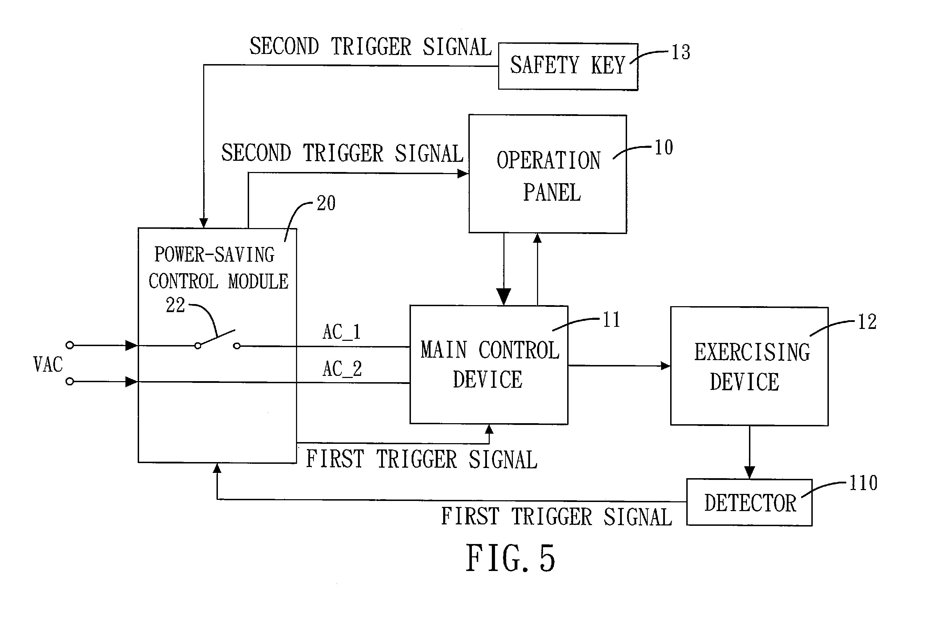

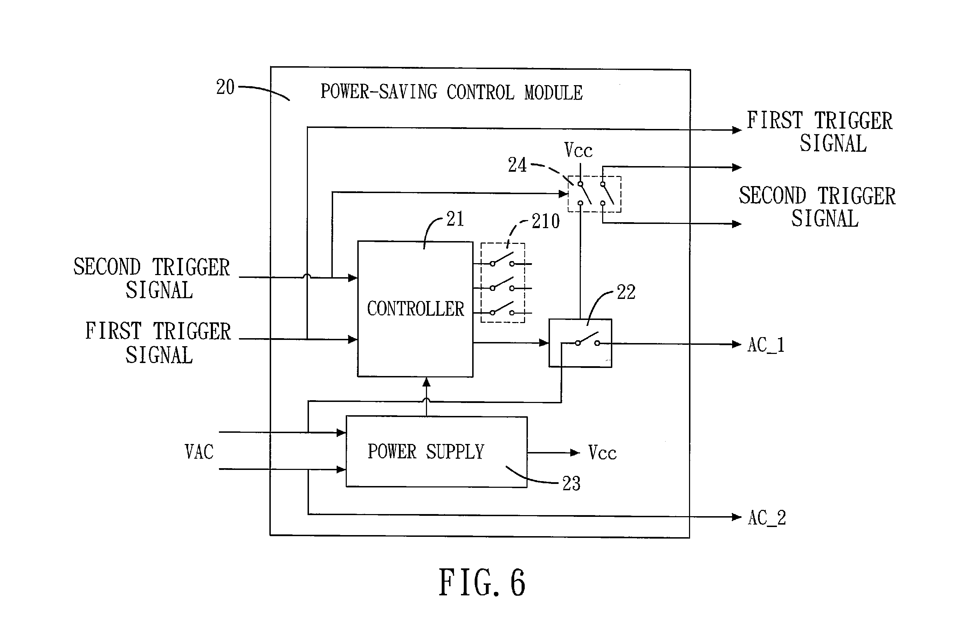

For another example, if the exercise machine is a treadmill with a safety key 13, with reference to FIGs. 5 and 6, the power-saving control module 20 of the invention further comprises a second electric switch 24. The treadmill can be turned on only if the safety key is ON. The second electric switch 24 can be a relay.

The safety key 13 is electrically connected to the controller 21 and the second electric switch 24. The second electric switch 24 is electrically connected to the first electric switch 22 and the power supply 23. If the safety key 13 is OFF, the second electric switch 24 disconnects the first electric switch 22 from the power supply 23. Afterward, the first electric switch 22 does not receive the DC working voltage to be turned off. On the other hand, if the safety key 13 is ON, the second electric switch 24 connects the first electric switch 22 to the power supply 23. Afterward, the first electric switch 22 can receive the DC working voltage to be controlled by the controller 21 to connect or disconnect the main control device 11 to or from the power source (VAC) according to the turn-on signal and a turn-off signal. Therefore, the treadmill is workable only when the safety key 13 is ON.

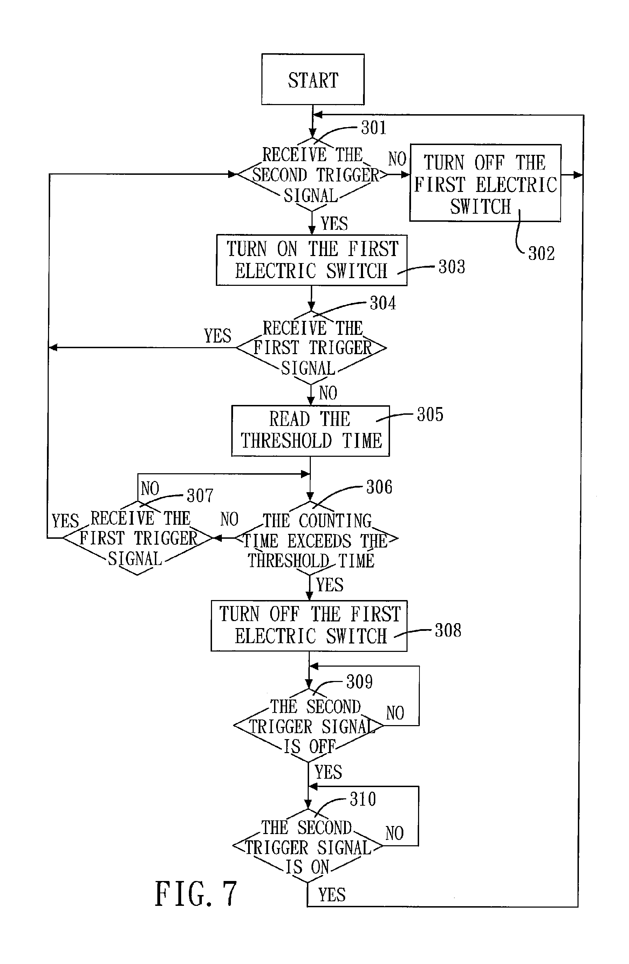

With reference to FIG. 7, for the treadmill, the controller 21 executes the following steps to reach the goal of power-saving.

The controller 21 receives a second trigger signal and determines whether the second trigger signal is ON or OFF (step 301), wherein an ON/OFF state of the second trigger signal is defined by an ON/ OFF state of the safety key 13.

When the second trigger signal is OFF, the controller 21 turns off the first electric switch 22 to disconnect the main control device 11 from the power source (VAC) (step 302), such that the treadmill is shut down.

When the second trigger signal is ON, the controller 21 turns on the first electric switch 22 to connect the main control device 11 to the power source (VAC) (step 303), such that the main control device 11 can receive the main power.

After the first electric switch 22 is turned on, the controller 21 determines whether a first trigger signal step is received (304), wherein the first trigger signal can be the RPM signal of the detector 110 or other signals which are generated from the treadmill. If the controller 21 receives the first trigger signal, which means the treadmill is in use, the controller 21 will return to the step (301) until the controller 21 no longer receives the first trigger signal. If the controller 21 determines the first trigger signal is not received, which means the treadmill is in a standby state, the controller 21 will activate the timer 211, read the counting time of the timer 211 and read the threshold time from the time selector 210 (step 305).

When the controller 21 gets the counting time and the threshold time, the controller 21 determines whether the counting time exceeds the threshold time (step 306).

When the counting time does not exceed the threshold time, which means the standby time of the treadmill is acceptable, the controller 21 keeps determining whether the first trigger signal is received (step 307). If the controller 21 receives the first trigger signal before the counting time exceeds the threshold time, which means the treadmill is in use again, the controller 21 will return to the step (301), reset the timer 211 and turn on the first electric switch 22. On the other hand, if the controller 21 does not receive the first trigger signal after the counting time exceeds the threshold time, which means the treadmill is in a standby state, the controller 21 will return to the step (306).

If the counting time exceeds the threshold time, which means the standby time of the treadmill is too long to be acceptable, the controller 21 will turn off the first electric switch 22 to disconnect the main control device 11 from the power source (VAC). The treadmill will then be shut down.

After the treadmill is shut down, the controller 21 determines whether the second trigger signal is OFF (step 309). If the second trigger signal is not OFF, the controller 21 will repeat the act of determining whether the second trigger signal is OFF until the second trigger signal is OFF.

After the controller 21 determines the second trigger signal is OFF, the controller 21 then determines whether the second trigger signal is ON (step 310). If the second trigger signal is not ON, the controller 21 will repeat the act of determining whether the second trigger signal is ON until the second trigger signal is ON. On the other hand, if the second trigger signal is ON, the controller 21 will return to the step (301). Therefore, the controller 21 reboots the treadmill by the steps (309) and (310). The safety key 13 should be first turned OFF and then turned ON, such that the controller 21 can boot the treadmill again.

For the treadmill, if the counting time of the timer 211 exceeds the threshold time, the controller 21 automatically shuts down the treadmill. As a result, because the treadmill is shut down, the operation panel 10 and the main control device 11 do not consume electrical power such that the goal of power-saving is achieved.

In conclusion, the power-saving control module of the present invention is adapted to be installed to any exercising machine including an exercise bike, a treadmill and a vibration exercising machine. Furthermore, the power-saving control module of the present invention can be directly connected to the operation panel, main control device and exercising device without greatly changing the original wire layout of the body training machine, such that the structure of the invention is easy to realize.

## Claims

1. A power-saving control module for a body training machine, the power-saving control module comprising:
a controller (21) having a timer (211) and a time selector (210) for setting a threshold time, the controller (21) electrically connected to the body training machine for receiving a first trigger signal; wherein when the controller (21) does not receive the first trigger signal, the controller (21) reads the threshold time from the time selector (210) and activates the timer (211) to count time; wherein the controller (21) generates a turn-off signal when a counting time of the timer (211) exceeds the threshold time and the controller (21) still does not receive the first trigger signal;
a first electric switch (22) electrically connected to the controller (21) to disconnect the body training machine from a power source when the turn-off signal is received; and
a power supply (23) electrically connected to the controller (21) and the first electric switch (22) for providing a working voltage.

2. The control module as claimed in claim 1, wherein when the timer (211) is counting time, the controller (21) resets the timer (211) and keeps activating the first electric switch (22) if the first trigger signal is received.

3. The control module as claimed in claim 1 or 2 further comprising a second electric switch (24), wherein
the controller (21) further receives a second trigger signal from the body training machine;
the second electric switch (24) is electrically connected to the power supply (23) and the first electric switch (22) to connect or disconnect the first electric switch (22) according to the second trigger signal to or from the power supply (23); and
the controller (21) generates a turn-on signal or the turn-off signal to connect or disconnect the body training machine to or from the power source according to the first trigger signal and the second trigger signal.

4. The control module as claimed in claim 3, wherein when the controller (21) firstly determines that the second trigger signal is OFF and then determines that the second trigger signal is ON, the controller (21) reboots the body training machine.

5. The control module as claimed in claim 4, wherein the timer (211) is a built-in timer of the controller (21).
